# EUROPÄISCHE PATENTSCHRIFT

(11) **EP 2 930 156 B1**
(45) Veröffentlichungstag und Bekanntmachung des Hinweises auf die Patenterteilung: **15.01.2020**
(21) Anmeldenummer: 14163680.3
(22) Anmeldetag: 07.04.2014
(51) Int. Cl.: C03C 3/062, C03C 3/064, C03C 3/068, C03C 3/085, C03C 3/091, C03C 3/093, C03C 4/00, C03C 10/00, C03B 32/02, C03C 10/14

(54) **Verwendung von Glaskeramik mit Quarz-Mischkristallphase als Dentalmaterial**
Use of Glass ceramic with quartz mixed crystal phase as dental material
Utilisation de vitrocéramique avec une phase cristalline mixte de quartz comme matériau dentaire

(43) Veröffentlichungstag der Anmeldung: 14.10.2015
(73) Patentinhaber: Ivoclar Vivadent AG, 9494 Schaan (LI)
(72) Erfinder: Dittmer, Marc, AT-6800 Feldkirch (AT); Höland, Wolfram, FL-9494 Schaan (LI); Schweiger, Marcel, CH-7000 Chur (CH); Rüssel, Christian, D-05571 Cospeda (DE); Berndt, Sabrina, D-07751 Jena (DE)
(74) Vertreter: Uexküll & Stolberg

(56) Entgegenhaltungen:
- US-A- 3 205 079
- US-A- 3 524 748
- US-A- 3 873 329
- US-B1- 6 627 565
- DITTMER MARC ET AL: "Crystallization and mechanical properties of MgO/Al2O3/SiO2/ZrO2glass-ceramics with and without the addition of yttria", SOLID STATE SCIENCES, ELSEVIER, PARIS, FR, Bd. 13, Nr. 12, 12. Oktober 2011 (2011-10-12), Seiten 2146-2153, XP028597027, ISSN: 1293-2558, DOI: 10.1016/J.SOLIDSTATESCIENCES.2011.09.005
- DITTMER M ET AL: "Self-organized nanocrystallinity in MgO-Al2O3-SiO2 glasses with ZrO2 as nucleating agent", MATERIALS CHEMISTRY AND PHYSICS, ELSEVIER SA, SWITZERLAND, TAIWAN, REPUBLIC OF CHINA, Bd. 124, Nr. 2-3, 1. Dezember 2010 (2010-12-01), Seiten 1083-1088, XP027411295, ISSN: 0254-0584 [gefunden am 2010-10-09]
- MARC DITTMER ET AL: "Colorless and high strength MgO/Al2O3/SiO2 glass-ceramic dental material using zirconia as nucleating agent", JOURNAL OF BIOMEDICAL MATERIALS RESEARCH PART B: APPLIED BIOMATERIALS, Bd. 100B, Nr. 2, 21. November 2011 (2011-11-21), Seiten 463-470, XP055121574, ISSN: 1552-4973, DOI: 10.1002/jbm.b.31972
- Christian Rüssel ET AL: "Zahnersatz aus hochfesten Glaskeramiken", , 3. Dezember 2012 (2012-12-03), XP055121565, Gefunden im Internet: URL:http://www.git-labor.de/forschung/mate rialien/zahnersatz-aus-hochfesten-glaskera miken [gefunden am 2014-06-04]

## Beschreibung

Die Erfindung betrifft die Verwendung von Glaskeramik mit Quarz-Mischkristallphase als Dentalmaterial und bevorzugt zur Herstellung von dentalen Restaurationen.

Glaskeramiken mit Quarz-Mischkristallphase sind aus dem Stand der Technik bekannt.

Die DE 25 07 131 beschreibt spezielle Magnesium-Alumino-Silikat-Glaskeramiken mit ZrO₂-Gehalten von 4 bis 10 Gew.-%. Aus den Glaskeramiken hergestellte Körper weisen eine heterogene Struktur auf, indem sich das Kristallgefüge der Oberflächenschicht von dem des Inneren der Körper unterscheidet. Die auf diese Weise erzeugte Oberflächendruckspannung hat einen wesentlichen Einfluss auf die mechanischen Eigenschaften, so dass eine maschinelle Bearbeitung der Oberflächenschicht eine Beeinträchtigung der mechanischen Eigenschaften zur Folge hätte. In der Oberflächenschicht konnten Hochquarz-Mischkristalle und im Inneren der Körper Tiefquarz-Mischkristalle nachgewiesen werden.

Die US 3,205,079 beschreibt halbkristalline Keramikkörper, die im Wesentlichen aus MgO, Al₂O₃ und SiO₂ bestehen und ferner ZrO₂ als Keimbildner enthalten. Diese können zur Herstellung von Ofenwänden, zur Isolation von elektrischen Komponenten und für Essgeschirr eingesetzt werden.

Die US 3,873,329 beschreibt glaskeramische Gegenstände, die als Hauptbestandteile MgO, Al₂O₃, B₂O₃ und SiO₂ und zudem eine Kombination von TiO₂ und ZrO₂ als Keimbildner enthalten. Die glaskeramischen Gegenstände weisen α-Quarz und Sapphirin als Hauptkristallphasen auf. Durch Ionenaustausch bedingte Druckspannung in den oberflächennahen Bereichen führt zu einer erhöhten mechanischen Festigkeit der glaskeramischen Gegenstände.

Der Artikel von Marc Dittmer et al. in Materials Chemistry and Physics 124 (2010) 1083-1088 beschreibt den Einfluss von ZrO₂ als Keimbildner auf das System MgO-Al₂O₃-SiO₂ und die Umwandlung von Hoch- zu Tiefquarz-Mischkristallphasen sowie die Volumenkonzentrationen der Kristallphasen.

Der Artikel von Marc Dittmer et al. in Solid State Sciences 13 (2011) 2146-2153 beschreibt MgO/Al₂O₃/SiO₂/ZrO₂-Glaskeramiken und den Einfluss von Yttriumoxid-stabilisiertem Zirkonoxid und monoklinem Zirkonoxid auf die Keimbildung, die entstehenden Kristallphasen und die mechanischen Eigenschaften der resultierenden Glaskeramiken.

Die US 6,627,565 beschreibt MgO/Al₂O₃/SiO₂-Glaskeramiken mit TiO₂ als Keimbildner, die verschiedene Kristallphasen, wie beispielsweise Tiefquarz, sonstige Kristallphasen auf Quarzbasis oder Enstatit, aufweisen und sich wegen ihrer physikalischen Eigenschaften insbesondere für die Herstellung von Speichermedien eignen.

Die JP 2000/063144 offenbart Magnesium-Alumino-Silikat-Gläser zur Herstellung von Substraten für Speichermedien, die geringe Mengen von 0 bis 10 Mol.-% an ZrO₂ und große Mengen an B₂O₃ aufweisen.

Die GB 2 172 282 A beschreibt Magnesium-Alumino-Silikat-Glaskeramiken, die angesichts der Löslichkeitsgrenze maximal 13,0 Gew.-% ZrO₂ enthalten können. Die Glaskeramiken sind für mikroelektronische Anwendungen und insbesondere als Beschichtung für Substrate wie z.B. Aluminium vorgesehen und sie haben neben einer hohen Festigkeit eine geeignete Dielektrizitätskonstante im Bereich von 7 bis 10 sowie einen hohen elektrischen Widerstand.

In der Dissertation von M. Dittmer "Gläser und Glaskeramiken im System MgO-Al2O3SiO2 mit ZrO2 als Keimbildner", Universität Jena 2011, wurde festgestellt, dass die Löslichkeitsgrenze von ZrO₂ in den beschriebenen MgO-Al₂O₃SiO₂-Glaskeramiken bei 12,7 Gew.-% liegt.

In dem im Internet unter http://www.git-labor.de/forschung/ materialien/zahnersatz-aus-hochfesten-glaskeramiken veröffentlichten Artikel von C. Rüssel und A. Gawronski wird beschrieben, dass Glaskeramiken des Magnesiumoxid/Aluminiumoxid/Siliciumoxid (MAS) Glassystems nach geeigneter Temperaturbehandlung gute mechanische Eigenschaften besitzen. Es wird weiter beschrieben, dass in diesen Glaskeramiken Quarz als Mischkristallphase ausgeschieden wird. Als effektiver Keimbildner wird ZrO₂ in einer Konzentration von 6 Mol-% erwähnt.

In dem Artikel von M. Dittmer und C. Rüssel in J. Biomed. Mater. Res. Part B:100B:463-470 (2012) werden Glaskeramiken mit Hochquarz- oder Tiefquarz-Mischkristallphase als Hauptkristallphase beschrieben, die maximal 12,5 Gew.-% ZrO₂ enthalten. Es wurde gezeigt, dass die Erhöhung des ZrO₂-Gehalts von 10,2 auf 12,5 Gew.-% ZrO₂ regelmäßig zu einer Verringerung der Biegefestigkeit unabhängig davon führt, bei welcher Temperatur die Bildung der Glaskeramiken aus den entsprechenden Ausgangsgläsern erfolgte. Insgesamt sind die mit diesen Glaskeramiken erzielten Festigkeiten und auch die Transluzenz nicht völlig zufriedenstellend für eine Anwendung als Dentalmaterial.

Der Erfindung liegt daher die Aufgabe zugrunde, eine Glaskeramik zur Verwendung als Dentalmaterial bereit zu stellen, die über eine Kombination von hoher Festigkeit und guter Transluzenz verfügt. Die Glaskeramik soll weiter in einfacher Weise zu dentalen Restaurationen verarbeitbar sein und sich damit ausgezeichnet als restauratives Dentalmaterial eignen.

Diese Aufgabe wird durch die Verwendung von Glaskeramik mit Quarz-Mischkristallphase als Dentalmaterial nach den Ansprüchen 1 bis 13 gelöst. Gegenstand der Erfindung ist ebenfalls die Verwendung eines Ausgangsglases nach den Ansprüchen 14 bis 18 als Dentalmaterial.

Die erfindungsgemäß verwendete Glaskeramik mit Quarz-Mischkristallphase zeichnet sich dadurch aus, dass sie die folgenden Komponenten enthält

| Komponente | Gew.-% |
|---|---|
| SiO₂ | 37,0 bis 50,0 |
| Al₂O₃ | 25,0 bis 39,0 |
| MgO | 5,0 bis 15,0 |
| ZrO₂ | 13,5 bis 19,0. |

Diese Glaskeramik, im Folgenden auch als "Quarz-Mischkristall-Glaskeramik" bezeichnet, zeigt überraschenderweise eine vorteilhafte Kombination von für ein restauratives Dentalmaterial wünschenswerten mechanischen und optischen Eigenschaften. Es ist zudem überraschend, dass in ihr die angegebenen hohen Mengen an ZrO₂ eingebaut werden können.

Mit dem Begriff "Quarz-Mischkristallphase" ist eine Kristallphase aus SiO₂ gemeint, bei der in das Gitter des SiO₂ Fremdionen oder Fremdatome entweder in Zwischengitterplätze oder in Gitterplätze eingebaut sind. Bei diesen Fremdionen oder Fremdatomen kann es sich insbesondere um Al sowie Mg, Li und/oder Zn handeln. Dabei kann Al in dem Mischkristall in der gleichen molaren Konzentration vorliegen wie Zn und Mg zusammengenommen.

Die erfindungsgemäß verwendete Quarz-Mischkristall-Glaskeramik enthält insbesondere 38,0 bis 49,0 Gew.-% und vorzugsweise 38,5 bis 48,0 Gew.-% SiO₂.

Es ist weiter bevorzugt, dass die Glaskeramik 26,0 bis 38,0 und insbesondere 27,0 bis 37,0 Gew.-% Al₂O₃ enthält.

Auch ist eine Glaskeramik bevorzugt, die 6,0 bis 14,0 und insbesondere 7,0 bis 13,5 Gew.-% MgO enthält.

Weiter ist eine Glaskeramik bevorzugt, die 14,0 bis 18,0 Gew.-% ZrO₂ enthält.

In einer bevorzugten Ausführungsform enthält die erfindungsgemäß verwendete Glaskeramik mindestens eine und bevorzugt alle folgenden Komponenten in den angegebenen Mengen:

| Komponente | Gew.-% |
|---|---|
| Li₂O | 0 bis 1,0 |
| Na₂O | 0 bis 1,0 |
| K₂O | 0 bis 1,0 |
| CaO | 0 bis 2,5 |
| SrO | 0 bis 4,0 |
| ZnO | 0 bis 15,0, insbesondere 0 bis 8,0 |
| B₂O₃ | 0 bis 1,0. |

Weiter ist es bevorzugt, dass die zweiwertigen Oxide CaO, SrO, MgO und ZnO sowie Mischungen davon in einer Menge von 5,0 bis 20,0 Gew.-% in der Glaskeramik enthalten sind.

Die erfindungsgemäß verwendete Glaskeramik kann darüber hinaus noch Zusatzkomponenten enthalten, die insbesondere ausgewählt sind aus Färbemitteln und Fluoreszenzmitteln. Beispiele für Färbemittel sind Oxide von d- und f-Elementen, wie z.B. CeO₂.

Es ist weiter bevorzugt, dass die erfindungsgemäß verwendete Glaskeramik die Quarz-Mischkristallphase als Hauptkristallphase enthält.

Mit dem Begriff "Hauptkristallphase" wird die Kristallphase bezeichnet, die von allen in der Glaskeramik vorhandenen Kristallphasen den höchsten Gewichtsanteil hat. Die Bestimmung der Mengen der Kristallphasen erfolgt dabei insbesondere mit der Rietveld-Methode. Ein geeignetes Verfahren zur quantitativen Analyse der Kristallphasen mittels der Rietveld-Methode ist z.B. in der Dissertation von M. Dittmer "Gläser und Glaskeramiken im System MgO-Al2O3SiO2 mit ZrO2 als Keimbildner", Universität Jena 2011, beschrieben.

Die erfindungsgemäß verwendete Glaskeramik enthält vorzugsweise ebenfalls Zirkonoxid, insbesondere tetragonales Zirkonoxid, und/oder MgAl₂O₄ als Kristallphase.

Es sind auch weitere Kristallphasen, wie insbesondere Indialit/Cordierit, Sapphirin, Mullit oder Cristobalit möglich.

Die Quarz-Mischkristallphase in der erfindungsgemäß verwendeten Glaskeramik wird üblicherweise durch eine Hochquarz-Mischkristallphase, eine Tiefquarz-Mischkristallphase oder eine Mischung dieser Kristallphasen gebildet.

In einer Ausführungsform enthält die erfindungsgemäß verwendete Glaskeramik daher Hochquarz-Mischkristallphase, Tiefquarz-Mischkristallphase oder eine Mischung dieser.

In einer bevorzugten Ausführungsform enthält die Glaskeramik Hochquarz-Mischkristallphase in einer höheren Menge als Tiefquarz-Mischkristallphase und insbesondere enthält die Glaskeramik Hochquarz-Mischkristallphase als Hauptkristallphase. Die Glaskeramik dieser Ausführungsform wird im Folgenden auch als "Hochquarz-Mischkristall-Glaskeramik" bezeichnet.

In einer anderen bevorzugten Ausführungsform enthält die Glaskeramik Tiefquarz-Mischkristallphase in einer höheren Menge als Hochquarz-Mischkristallphase und insbesondere enthält die Glaskeramik Tiefquarz-Mischkristallphase als Hauptkristallphase.

Die Glaskeramik dieser Ausführungsform wird im Folgenden auch als "Tiefquarz-Mischkristall-Glaskeramik" bezeichnet.

Die erfindungsgemäß verwendete Tiefquarz-Mischkristall-Glaskeramik zeichnet sich durch besonders gute mechanische Eigenschaften und optische Eigenschaften aus und sie kann durch Wärmebehandlung eines entsprechenden Ausgangsglases, eines entsprechenden Ausgangsglases mit Keimen oder einer entsprechenden Hochquarz-Mischkristall-Glaskeramik gebildet werden. Diese Materialien können daher als Vorstufen für die erfindungsgemäß verwendete Tiefquarz-Mischkristall-Glaskeramik dienen.

Die erfindungsgemäß verwendete Tiefquarz-Mischkristall-Glaskeramik hat eine Bruchzähigkeit, gemessen als K_{IC} Wert, von insbesondere mindestens etwa 1,5, bevorzugt mindestens etwa 1,7 und besonders bevorzugt mindestens etwa 1,9 MPa•m^{0.5}. Dieser Wert wurde mit dem Vicker's-Verfahren bestimmt und mittels Evans- und Charles-Gleichung berechnet.

Weiter hat die erfindungsgemäß verwendete Tiefquarz-Mischkristall-Glaskeramik eine hohe biaxiale Bruchfestigkeit von insbesondere mindestens 350 MPa und bevorzugt mindestens 500 MPa und bis zu insbesondere 800 und bevorzugt bis zu 1000 MPa. Die biaxiale Bruchfestigkeit wurde gemäß ISO 6872 (2008) bestimmt.

Demgegenüber zeichnet sich die erfindungsgemäß verwendete Hochquarz-Mischkristall-Glaskeramik insbesondere durch mechanische Eigenschaften aus, die eine besonders einfache und schnelle maschinelle Bearbeitung gestatten, um die Glaskeramik z.B. in die Form einer Dentalrestauration zu bringen.

Die erfindungsgemäß verwendete Quarz-Mischkristall-Glaskeramik, insbesondere die erfindungsgemäß verwendete Hochquarz-Mischkristall-Glaskeramik oder die erfindungsgemäß verwendete Tiefquarz-Mischkristall-Glaskeramik, können durch Wärmebehandlung von Vorstufen mit entsprechender Zusammensetzung hergestellt werden. Diese Vorstufen sind ein entsprechend zusammengesetztes Ausgangsglas und ein entsprechend zusammengesetztes Ausgangsglas mit Keimen. Die Bezeichnung "entsprechender Zusammensetzung" bedeutet, dass diese Vorstufen die gleichen Komponenten in den gleichen Mengen wie die Glaskeramik enthalten, wobei die Komponenten wie bei Gläsern und Glaskeramiken üblich mit Ausnahme von Fluor als Oxide berechnet werden.

Die Erfindung betrifft daher ebenfalls die Verwendung eines Ausgangsglases, das die Komponenten der erfindungsgemäß verwendeten Quarz-Mischkristall-Glaskeramik enthält, als Dentalmaterial.

Das erfindungsgemäß verwendete Ausgangsglas enthält daher als Komponenten

| Komponente | Gew.-% |
|---|---|
| SiO₂ | 37,0 bis 50,0 |
| Al₂O₃ | 25,0 bis 39,0 |
| MgO | 5,0 bis 15,0 |
| ZrO₂ | 13,5 bis 19,0. |

Weiter kann das Ausgangsglas auch noch andere Komponenten enthalten, wie sie oben für die erfindungsgemäß verwendete Quarz-Mischkristall-Glaskeramik angegeben sind. Es sind alle solche Ausführungsformen für die Komponenten des Ausgangsglases bevorzugt, die auch für die Komponenten der erfindungsgemäß verwendeten Quarz-Mischkristall-Glaskeramik als bevorzugt angegeben sind.

Die Erfindung betrifft ebenfalls die Verwendung eines solchen Ausgangsglases, das Keime für die Kristallisation von Quarz-Mischkristallphase enthält, als Dentalmaterial.

Durch Wärmebehandlung des Ausgangsglases kann zunächst das Ausgangsglas mit Keimen erzeugt werden, welches seinerseits durch weitere Wärmebehandlung in die Quarz-Mischkristall-Glaskeramik umgewandelt werden kann. Dabei kann durch die Wärmebehandlung des Ausgangsglases oder des Ausgangsglases mit Keimen zunächst die Hochquarz-Mischkristall-Glaskeramik erzeugt werden und die Hochquarz-Mischkristall-Glaskeramik kann durch weitere Wärmebehandlung in die Tiefquarz-Mischkristall-Glaskeramik umgewandelt werden. Es ist ebenfalls möglich, die Tiefquarz-Mischkristall-Glaskeramik direkt durch Wärmebehandlung des Ausgangsglases oder des Ausgangsglases mit Keimen zu bilden.

Die Herstellung des Ausgangsglases erfolgt insbesondere in der Weise, dass eine Mischung von geeigneten Ausgangsmaterialien, wie z.B. Carbonaten und Oxiden, bei Temperaturen von insbesondere etwa 1500 bis 1700°C für 0,5 bis 4 h geschmolzen wird. Zur Erzielung einer besonders hohen Homogenität kann die erhaltene Glasschmelze in Wasser gegossen werden, um eine Glasfritte zu bilden, und die erhaltene Fritte wird dann erneut aufgeschmolzen.

Die Schmelze kann dann in Formen, z.B. Stahl- oder Graphitformen, gegossen werden, um Rohlinge des Ausgangsglases, sogenannte Massivglasrohlinge oder monolithische Rohlinge, zu erzeugen. Üblicherweise werden diese monolithischen Rohlinge zunächst entspannt, z.B. indem sie 5 bis 30 min bei 750 bis 850°C gehalten werden, und dann langsam auf Raumtemperatur abgekühlt.

Es ist ebenfalls möglich, die Schmelze erneut in Wasser zu geben, um eine Fritte herzustellen. Diese Fritte kann nach Mahlen und gegebenenfalls Zugabe weiterer Komponenten, wie Färbe- und Fluoreszenzmitteln, zu einem Rohling, einem sogenannten Pulverpressling, gepresst werden.

Schließlich kann das Ausgangsglas auch zu einem Pulver verarbeitet werden.

Aus dem Ausgangsglas kann dann durch Wärmebehandlung das Ausgangsglas mit Keimen erzeugt werden. Dies wird auch als Keimbildungsprozess bezeichnet.

Offenbart wird daher ebenfalls ein Verfahren zur Herstellung des Ausgangsglases mit Keimen für die Kristallisation von Quarz-Mischkristallphase, bei dem
(a) das Ausgangsglas einer Wärmebehandlung bei einer Temperatur von 750 bis 870°C und insbesondere 770 bis 850°C für eine Dauer von insbesondere 5 bis 120 min und vorzugsweise 5 bis 60 min unterworfen wird.

Aus dem Ausgangsglas mit Keimen kann dann durch Wärmebehandlung die erfindungsgemäß verwendete Quarz-Mischkristall-Glaskeramik gebildet werden.

Offenbart wird daher ebenfalls ein Verfahren zur Herstellung der Quarz-Mischkristall-Glaskeramik, bei dem das Ausgangsglas, insbesondere das Ausgangsglas mit Keimen für die Kristallisation von Quarz-Mischkristallphase, mindestens einer Wärmebehandlung bei einer Temperatur von 850 bis 1200°C unterworfen wird.

Das Ausgangsglas oder das Ausgangsglas mit Keimen kann z.B. in Form eines Massivglasrohlings, eines Pulverpresslings oder in Form eines Pulvers der mindestens einen Wärmebehandlung unterzogen werden.

Die im oben beschriebenen Verfahren durchgeführte mindestens eine Wärmebehandlung kann auch im Rahmen eines Aufsinterns erfolgen.

Die Herstellung der erfindungsgemäß verwendeten Hochquarz-Mischkristall-Glaskeramik und der erfindungsgemäß verwendeten Tiefquarz-Mischkristall-Glaskeramik erfolgt bevorzugt mittels bestimmter Wärmebehandlungen, wie sie im Folgenden angegeben sind.

Offenbart wird daher auch ein Verfahren, bei dem
(b) das Ausgangsglas oder das Ausgangsglas mit Keimen für die Kristallisation von Quarz-Mischkristallphase, einer Wärmebehandlung bei einer Temperatur von 850 bis 1000°C und insbesondere 890 bis 980°C für eine Dauer von insbesondere 20 bis 600 min, bevorzugt 30 bis 180 min und besonders bevorzugt 30 bis 90 min unterworfen wird, um die erfindungsgemäß verwendete Hochquarz-Mischkristall-Glaskeramik zu bilden.

Offenbart wird daher auch ein Verfahren, bei dem
(c) das Ausgangsglas, das Ausgangsglas mit Keimen für die Kristallisation von Quarz-Mischkristallphase oder die Hochquarz-Mischkristall-Glaskeramik einer Wärmebehandlung bei einer Temperatur von 1000 bis 1200°C und insbesondere 1050 bis 1150°C für eine Dauer von insbesondere 10 bis 240 min und vorzugsweise 30 bis 200 min unterworfen wird, um die erfindungsgemäß verwendete Tiefquarz-Mischkristall-Glaskeramik zu bilden.

Durch die oben geschilderte Keimbildung und gesteuerte Kristallisation des Ausgangsglases kann in Abhängigkeit von der Zusammensetzung des Ausgangsglases und der gewählten Wärmebehandlung zur gesteuerten Kristallisation die erfindungsgemäß verwendete Hochquarz-Mischkristall-Glaskeramik oder die erfindungsgemäß verwendete Tiefquarz-Mischkristall-Glaskeramik gebildet werden.

Es wird angenommen, dass die Quarz-Mischkristallphase der erfindungsgemäß verwendeten Glaskeramik durch den Einbau von Fremdionen in das SiO₂-Gitter und möglicherweise den Ersatz von zwei Si-Ionen durch zwei Al-Ionen und ein Mg-Ion erzeugt wird. Es wird weiter angenommen, dass durch Kristallisation der Ausgangsgläser bei niedrigeren Temperaturen, insbesondere 850 bis 1000°C, bevorzugt die Hochtemperatur-Modifikation des Quarz gebildet wird und diese Modifikation durch den Einbau der Fremdionen auch bei Raumtemperatur stabil ist und sich nicht in die Tieftemperatur-Modifikation umwandelt, wie es bei reinem Quarz der Fall wäre. Überdies wird angenommen, dass es durch Kristallisation bei höheren Temperaturen, insbesondere 1000 bis 1200°C, zu einer Verarmung der Quarz-Mischkristallphase an Fremdionen kommt und damit die Stabilisierung der Hochtemperatur-Modifikation vermindert wird, wodurch bei Raumtemperatur die Tieftemperatur-Modifikation des Quarzes vorliegt.

Die erfindungsgemäß verwendeten Glaskeramiken und die erfindungsgemäß verwendeten Gläser liegen insbesondere als Pulver oder Rohlinge in beliebiger Form und Größe, z.B. monolithische Rohlingen, wie Plättchen, Quader oder Zylinder, oder Pulverpresslinge, vor. In diesen Formen können sie einfach weiterverarbeitet werden, z.B. zu dentalen Restaurationen. Sie können aber auch in Form von dentalen Restaurationen, wie Inlays, Onlays, Kronen, Veneers, Schalen oder Abutments, vorliegen.

Aus den erfindungsgemäß verwendeten Glaskeramiken und den erfindungsgemäß verwendeten Gläsern können dentale Restaurationen, wie Brücken, Inlays, Onlays, Kronen, Veneers, Schalen oder Abutments, hergestellt werden. Die Erfindung betrifft daher auch deren Verwendung als Dentalmaterial und insbesondere deren Verwendung zur Herstellung dentaler Restaurationen. Dabei ist es bevorzugt, dass der Glaskeramik oder dem Glas durch maschinelle Bearbeitung die Form der gewünschten dentalen Restauration gegeben wird.

Die maschinelle Bearbeitung erfolgt üblicherweise durch materialabtragende Verfahren und insbesondere durch Fräsen und/oder Schleifen. Es ist besonders bevorzugt, dass die maschinelle Bearbeitung im Rahmen eines CAD/CAM-Verfahrens durchgeführt wird. Für die maschinelle Bearbeitung können das erfindungsgemäß verwendete Ausgangsglas, das erfindungsgemäß verwendete Ausgangsglas mit Keimen sowie die erfindungsgemäß verwendete Quarz-Mischkristall-Glaskeramik verwendet werden. Dabei werden die erfindungsgemäß verwendeten Gläser und die erfindungsgemäß verwendeten Glaskeramiken insbesondere in Form von Rohlingen, bevorzugt Massivrohlingen, eingesetzt. Für die maschinelle Bearbeitung wird bevorzugt die erfindungsgemäß verwendete Hochquarz-Mischkristall-Glaskeramik verwendet. Die erfindungsgemäß verwendete Quarz-Mischkristall-Glaskeramik kann auch in einer noch nicht vollständig kristallisierten Form eingesetzt werden, die durch Wärmebehandlung bei niedrigerer Temperatur erzeugt wurde. Dies bietet den Vorteil, dass eine leichtere maschinelle Bearbeitung und damit der Einsatz von einfacheren Apparaten zur maschinellen Bearbeitung möglich ist. Nach der maschinellen Bearbeitung eines solchen teilkristallisierten Materials wird dieses regelmäßig einer weiteren Wärmebehandlung unterzogen, um eine weitere Kristallisation von Quarz-Mischkristallphase hervorzurufen.

Allgemein kann nach der Herstellung der gewünscht geformten dentalen Restauration, z. B. durch maschinelle Bearbeitung, diese insbesondere noch wärmebehandelt werden, um eingesetzte Vorläufer, wie Ausgangsglas, Ausgangsglas mit Keimen oder Hochquarz-Mischkristall-Glaskeramik in Tiefquarz-Mischkristall-Glaskeramik umzuwandeln oder die Kristallisation von Tiefquarz-Mischkristallphase zu steigern.

Die erfindungsgemäß verwendeten Glaskeramiken und die erfindungsgemäß verwendeten Gläser eignen sich allerdings auch als Beschichtungsmaterial von z.B. Keramiken und Glaskeramiken. Die Erfindung ist daher ebenfalls auf die Verwendung der erfindungsgemäß verwendeten Gläser oder der erfindungsgemäß verwendeten Glaskeramiken zur Beschichtung von insbesondere Keramiken und Glaskeramiken gerichtet.

Es wird daher auch ein Verfahren zur Beschichtung von Keramiken und Glaskeramiken offenbart, bei dem erfindungsgemäß verwendete Glaskeramiken oder erfindungsgemäß verwendete Gläser auf die Keramik oder Glaskeramik aufgebracht und einer Temperatur von mindestens 950 °C ausgesetzt werden.

Dies kann insbesondere durch Aufsintern erfolgen. Beim Aufsintern wird die Glaskeramik oder das Glas in üblicher Weise, z.B. als Pulver, auf das zu beschichtende Material, wie Keramik oder Glaskeramik, aufgebracht und anschließend gesintert.

Es ist bevorzugt, dass nach Abschluss des Beschichtungsvorganges die erfindungsgemäß verwendete Tiefquarz-Mischkristall-Glaskeramik vorliegt, da eine solche Glaskeramik über besonders gute mechanische und optische Eigenschaften verfügt.

Aufgrund der vorstehend geschilderten Eigenschaften der erfindungsgemäß verwendeten Glaskeramiken und der erfindungsgemäß verwendeten Gläser eignen sich diese insbesondere zum Einsatz in der Zahnheilkunde. Gegenstand der Erfindung ist daher auch die Verwendung dieser Glaskeramiken oder dieser Gläser als Dentalmaterial und insbesondere zur Herstellung dentaler Restaurationen oder als Beschichtungsmaterial für dentale Restaurationen, wie Kronen, Brücken und Abutments.

Die Erfindung wird im Folgenden anhand von sie nichtbeschränkenden Beispielen näher erläutert.

### Beispiele

### Beispiele 1 bis 14 - Zusammensetzung und Kristallphasen

Es wurden insgesamt 14 Gläser und Glaskeramiken mit der aus Tabelle I angegebenen Zusammensetzung über Erschmelzung entsprechender Ausgangsgläser und anschließende Wärmebehandlung zur gesteuerten Keimbildung und Kristallisation hergestellt.

Die angewendeten Wärmebehandlungen zur gesteuerten Keimbildung und gesteuerten Kristallisation sind ebenfalls in Tabelle I angegeben. Dabei bedeuten
- T_{N} und t_{N}: Angewendete Temperatur und Zeit für Keimbildung
- T_{C} und t_{C}: Angewendete Temperatur und Zeit für Kristallisation von Hochquarz-Mischkristall-Glaskeramik
- T_{FC} und t_{FC}: Angewendete Temperatur und Zeit für Kristallisation von Tiefquarz-Mischkristall-Glaskeramik

Dazu wurden zunächst die Ausgangsgläser im 100 bis 200 g Maßstab aus üblichen Rohstoffen bei 1500 bis 1700°C erschmolzen, wobei das Erschmelzen sehr gut ohne Bildung von Blasen oder Schlieren möglich war. Durch Eingießen der erschmolzenen Ausgangsgläser in Wasser wurden Glasfritten hergestellt, die zur Homogenisierung anschließend ein zweites Mal bei 1500 bis 1700°C für 0,5 bis 4 h geschmolzen wurden.

Die Schmelzen der Ausgangsgläser wurden in Graphit- oder Stahlformen eingegossen, um Glasmonolithe zu erzeugen. Diese Glasmonolithe wurden entspannt und langsam auf Raumtemperatur abgekühlt.

Eine erste Wärmebehandlung der Ausgangsgläser bei einer Temperatur von 780 bis 840°C führte zur Bildung von Ausgangsgläsern mit Keimen für die Kristallisation von Quarz-Mischkristallphase.

Diese keimhaltigen Ausgangsgläser kristallisierten durch eine weitere Wärmebehandlung bei 1100 bis 1130°C zu Tiefquarz-Mischkristall-Glaskeramiken, die Tiefquarz-Mischkristallphase als Hauptkristallphase enthielten, wie durch Röntgenbeugungsuntersuchungen bei Raumtemperatur festgestellt wurde.

Im Falle der Beispiele 7 und 8 führte die Wärmebehandlung des keimhaltigen Ausgangsglases bei einer Temperatur von lediglich 895°C bzw. 950°C zur Kristallisation von Hochquarz-Mischkristall-Glaskeramik. Diese Hochquarz-Mischkristall-Glaskeramik wurde durch eine weitere Wärmebehandlung bei 1130 bzw. 1100°C in die entsprechende Tiefquarz-Mischkristall-Glaskeramik umgewandelt.

Die Gläser, Gläser mit Keimen und die als Vorstufe erzeugten Hochquarz-Mischkristall-Glaskeramiken konnten sehr gut maschinell in einem CAD/CAM-Verfahren in die Form verschiedener Dentalrestaurationen gebracht werden, die bei Bedarf noch mit einer Verblendung versehen wurden.

Verschiedene Eigenschaften der erzeugten Tiefquarz-Mischkristall-Glaskeramiken sind ebenfalls in der Tabelle I aufgeführt. Diese Eigenschaften wurden in der Weise bestimmt, wie sie in den folgenden detaillierten Beispielen angegeben ist.

Im Folgenden sind einige Beispiele detaillierter beschrieben.

### Beispiel 1

Das Glas mit der Zusammensetzung gemäß Beispiel 1 wurde aus entsprechenden Rohstoffen bei einer Temperatur von 1650°C für 2 h erschmolzen und danach durch Eingiessen in Wasser in eine Glasfritte umgewandelt. Nach dem Trocknen im Trockenschrank wurde die Glasfritte erneut bei 1650°C für 2 h aufgeschmolzen und dann in Graphit-Formen gegossen, um Glasmonolithe herzustellen. Unmittelbar nach der Entformung der heissen Glasmonolithe wurden diese für 10 min bei 810°C entspannt und anschliessend langsam auf Raumtemperatur abgekühlt.

Auf die erhaltenen Glasblöcke wurden entsprechende Halter aufgeklebt, um eine CAM-Bearbeitung mittels Sirona inLab Schleifmaschinen zu ermöglichen. Die schleifende Bearbeitung erfolgte mit diamantbeschichteten Schleifwerkzeugen. Aus den Blöcken wurden Plättchen mit einem Durchmesser von ca. 12 mm und einer Dicke von ca. 2 mm herausgeschliffen.

Die Überführung der geschliffenen Plättchen in die Tiefquarz-Mischkristall-Glaskeramik erfolgte über eine thermische Behandlung. Dabei wurden die Plättchen in einem Muffelofen der Firma Nabertherm auf eine Temperatur von 1100°C erhitzt und nach einer Haltezeit von 180 min langsam auf Raumtemperatur abgekühlt.

Ein Teil der Plättchen wurde vor der Kristallisation der Tiefquarz-Mischkristallphase, d.h. im Glaszustand oder hoch-Quarz-Mischkristall-Zustand, und ein anderer Teil nach der Kristallisation der Tiefquarz-Mischkristallphase mit Diamantschleifscheiben auf eine Dicke von ca. 1.2 mm geschliffen und bis 0.5 µm poliert. An den auf diese Weise hergestellten und präparierten Proben wurde daraufhin die Biaxialfestigkeit gemäß ISO 6872 (2008) bestimmt. Es ergaben sich mittlere Festigkeiten von 257 MPa bei nachträglich bearbeiteten Proben und mittlere Festigkeiten von 849 MPa bei vor der Kristallisation bearbeiteten Proben.

Die Bestimmung des CR-Wertes erfolgte gemäß British Standard BS 5612 unter Verwendung eines CM-3700d-Spektrometers (Konica-Minolta) und ergab einen Wert von 82.5. Zusätzlich wurde in gleicher Weise der CR-Wert der Glaskeramik C bestimmt, die in dem Artikel von M. Dittmer und C. Rüssel in J. Biomed. Mater. Res. Part B:100B:463-470 (2012) beschrieben ist. Der CR-Wert dieser Glaskeramik lag bei 97,7%.

Die Bestimmung der Vickers Härte und der Bruchzähigkeit K_{IC} erfolgte an Plättchen mit den ungefähren Abmessungen 13 mm x 12 mm. Nach der Kristallisation wurden die Proben auf eine Dicke von ca. 2 mm geschliffen und bis 0,5 µm poliert. Anschließend erfolgten pro Probe 6 Eindrücke mit einer Belastungszeit von 30 s, einer Last von 2.5 kg bzw. einer Kraft F von 24.54 N. Im Anschluss wurden die Risslängen nach dem Eindruck von den Eckpunkten des Eindruckes bis zur Rissspitze bestimmt. Dabei wurden folgende Werte bestimmt:
Vickers Härte: 10,4 GPa
Bruchzähigkeit K_{IC}: 1, 90 MPa·m^{1/2}

### Beispiel 4

Das Glas mit der Zusammensetzung gemäß Beispiel 4 wurde aus entsprechenden Rohstoffen bei einer Temperatur von 1600°C für 30 min und 1610°C für 30 min erschmolzen und danach durch Eingiessen in Wasser in eine Glasfritte umgewandelt. Nach dem Trocknen im Trockenschrank wurde die Glasfritte erneut bei 1630°C für 1 h aufgeschmolzen und dann in Graphit-Formen gegossen, um Glasmonolithe herzustellen. Unmittelbar nach der Entformung der heissen Glasmonolithe wurden diese für 10 min bei 820°C entspannt und anschliessend langsam auf Raumtemperatur abgekühlt.

Auf die erhaltenen Glasblöcke wurden entsprechende Halter aufgeklebt, um eine CAM-Bearbeitung mittels Sirona inLab Schleifmaschinen zu ermöglichen. Die schleifende Bearbeitung erfolgte mit diamantbeschichteten Schleifwerkzeugen. Aus den Blöcken wurden Plättchen mit einem Durchmesser von ca. 12 mm und einer Dicke von ca. 2 mm herausgeschliffen.

Die Überführung der geschliffenen Plättchen in die Tiefquarz-Mischkristall-Glaskeramik erfolgte über eine thermische Behandlung. Dabei wurden die Plättchen in einem Muffelofen der Firma Nabertherm auf eine Temperatur von 1100°C erhitzt und nach einer Haltezeit von 180 min langsam auf Raumtemperatur abgekühlt.

Ein Teil der Plättchen wurde vor der Kristallisation der Tiefquarz-Mischkristallphase, d.h. im Glaszustand oder hoch-Quarz-Mischkristall-Zustand, und ein anderer Teil nach der Kristallisation der Tiefquarz-Mischkristallphase mit Diamantschleifscheiben auf eine Dicke von ca. 1,2 mm geschliffen und bis 0,5 µm poliert. An den auf diese Weise hergestellten und präparierten Proben wurde daraufhin die Biaxialfestigkeit gemäß ISO 6872 (2008) bestimmt. Es ergaben sich mittlere Festigkeiten von 393 MPa bei nachträglich bearbeiteten Proben und mittlere Festigkeiten von 825 MPa bei vor der Kristallisation bearbeiteten Proben.

Die Bestimmung des CR-Wertes erfolgte gemäß British Standard BS 5612 unter Verwendung eines CM-3700d-Spektrometers (Konica-Minolta) und ergab einen Wert von 63,0.

Die Bestimmung der Vickers Härte und der Bruchzähigkeit K_{IC} erfolgte an Plättchen mit den ungefähren Abmessungen 13 mm x 12 mm. Nach der Kristallisation wurde die Probe auf eine Dicke von ca. 2 mm geschliffen und bis 0,5 µm poliert. Anschließend erfolgten pro Probe 6 Eindrücke mit einer Belastungszeit von 30 s, einer Last von 2,5 kg bzw. einer Kraft F von 24,54 N. Im Anschluss wurden die Risslängen nach dem Eindruck von den Eckpunkten des Eindruckes bis zur Rissspitze bestimmt. Dabei konnten folgende Werte erreicht werden:
Vickers Härte: 10,3 GPa
Bruchzähigkeit K_{IC}: 2,3 MPa·m^{1/2}

### Beispiel 8

Das Glas mit der Zusammensetzung gemäß Beispiel 8 wurde aus entsprechenden Rohstoffen bei einer Temperatur von 1650°C für 1 h erschmolzen und danach durch Eingiessen in Wasser in eine Glasfritte umgewandelt. Nach dem Trocknen im Trockenschrank wurde die Glasfritte erneut bei 1650°C für 1 h aufgeschmolzen und dann in Graphit-Formen gegossen, um Glasmonolithe herzustellen. Unmittelbar nach der Entformung der heissen Glasmonolithe wurden diese für 10 min bei 800°C entspannt und anschliessend langsam auf Raumtemperatur abgekühlt.

Nachdem die Blöcke auf Raumtemperatur abgekühlt waren, wurden sie in einem Ofen vom Typ Programat (Ivoclar Vivadent AG) auf eine Temperatur von 950°C geheizt und für 60 min gehalten, um die Hochquarz-Mischkristall-Phase auszuscheiden.

Auf die erhaltenen Glaskeramikblöcke wurden entsprechende Halter aufgeklebt, um eine CAM-Bearbeitung mittels Sirona inLab Schleifmaschinen zu ermöglichen. Die schleifende Bearbeitung erfolgte mit diamantbeschichteten Schleifwerkzeugen. Aus den Blöcken wurden Plättchen mit einem Durchmesser von ca. 12 mm und einer Dicke von ca. 2 mm herausgeschliffen.

Die Überführung der geschliffenen Plättchen in die Tiefquarz-Mischkristall-Glaskeramik erfolgte über eine thermische Behandlung. Dabei wurden die Plättchen in einem Ofen vom Typ Programat (Ivoclar Vivadent AG) auf eine Temperatur von 1100°C erhitzt und nach einer Haltezeit von 60 min langsam auf Raumtemperatur abgekühlt.

Die Plättchen wurden anschließend mit Diamantschleifscheiben auf eine Dicke von ca. 1.2 mm geschliffen und bis 0.5 µm poliert. An den auf diese Weise hergestellten und präparierten Proben wurde daraufhin die Biaxialfestigkeit gemäß ISO 6872 (2008) bestimmt. Es wurden mittlere Festigkeiten von 227 MPa festgestellt.

Die Bestimmung des CR-Wertes erfolgte gemäß British Standard BS 5612 unter Verwendung eines CM-3700d-Spektrometers (Konica-Minolta)und ergab einen Wert von 85,3.

In der folgenden Tabelle I bedeutet:
hoch-Quarz-Mischkristall: Hochquarz-Mischkristallphase
tief-Quarz-Mischkristall: Tiefquarz-Mischkristallphase
t-ZrO₂: tetragonales ZrO₂
MgAl₂O₄: Spinell

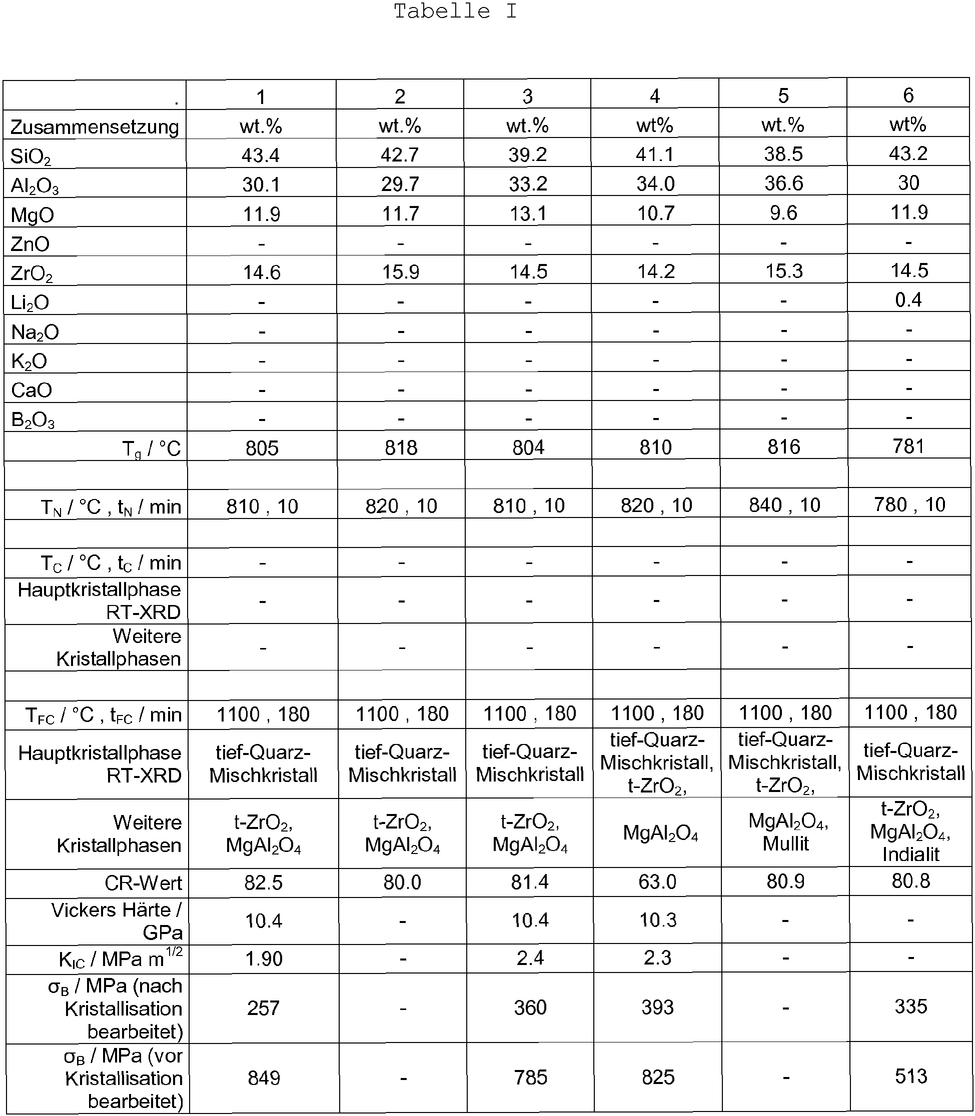

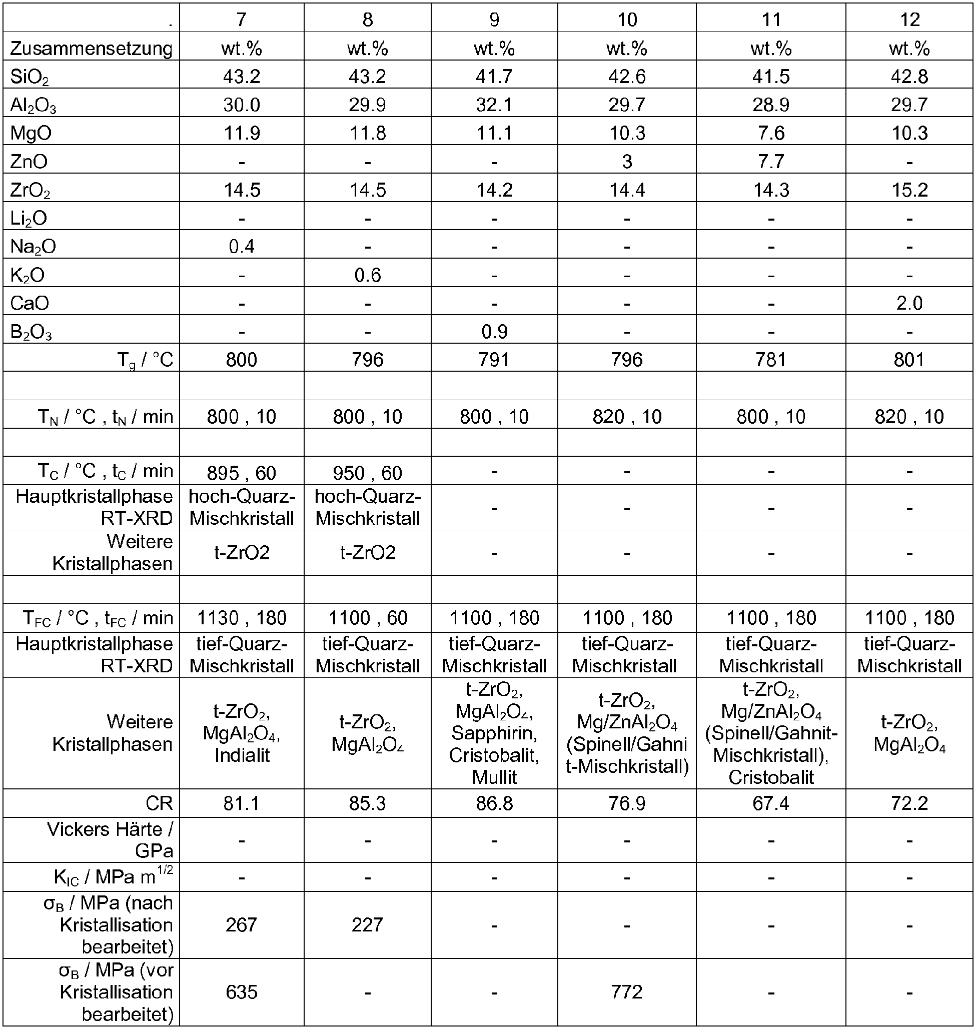

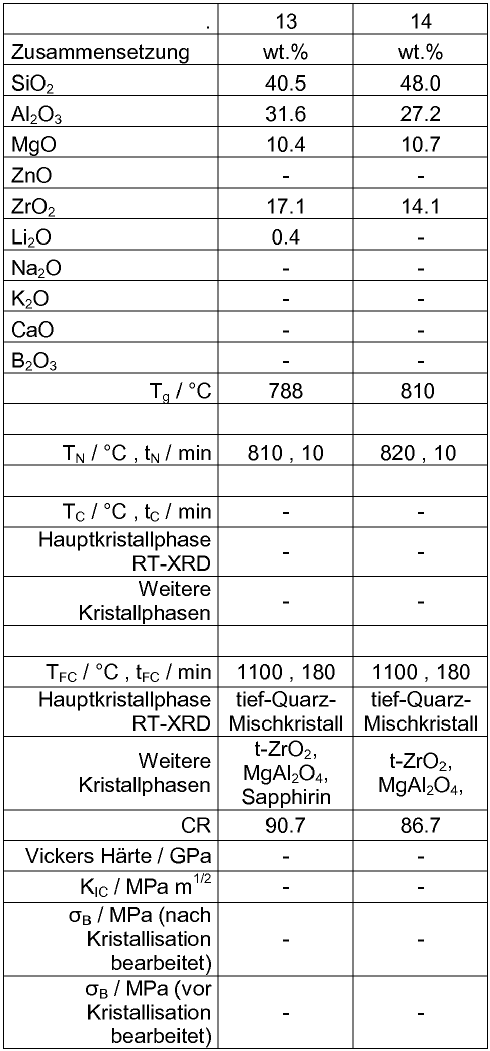

## Patentansprüche

1. Verwendung von Glaskeramik mit Quarz-Mischkristallphase, die die folgenden Komponenten enthält
| Komponente | Gew.-% |
|---|---|
| SiO₂ | 37,0 bis 50,0 |
| Al₂O₃ | 25,0 bis 39,0 |
| MgO | 5, 0 bis 15, 0 |
| ZrO₂ | 13,5 bis 19,0, |
als Dentalmaterial.

2. Verwendung nach Anspruch 1, bei der die Glaskeramik 38,0 bis 49,0 Gew.%, insbesondere 38,5 bis 48,0 Gew.-% SiO₂ enthält.

3. Verwendung nach Anspruch 1 oder 2, bei der die Glaskeramik 26,0 bis 38,0 und insbesondere 27,0 bis 37,0 Gew.% Al₂O₃ enthält.

4. Verwendung nach einem der Ansprüche 1 bis 3, bei der die Glaskeramik 6,0 bis 14,0 und insbesondere 7,0 bis 13,5 Gew.-% MgO enthält.

5. Verwendung nach einem der Ansprüche 1 bis 4, bei der die Glaskeramik 14,0 bis 18,0 Gew.-% ZrO₂ enthält.

6. Verwendung nach einem der Ansprüche 1 bis 5, bei der die Glaskeramik mindestens eine und bevorzugt alle folgenden Komponenten in den angegebenen Mengen enthält:
| Komponente | Gew.-% |
|---|---|
| Li₂O | 0 bis 1,0 |
| Na₂O | 0 bis 1,0 |
| K₂O | 0 bis 1,0 |
| CaO | 0 bis 2,5 |
| SrO | 0 bis 4,0 |
| ZnO | 0 bis 15,0 |
| B₂O₃ | 0 bis 1,0. |

7. Verwendung nach einem der Ansprüche 1 bis 6, bei der die Glaskeramik die Quarz-Mischkristallphase als Hauptkristallphase enthält.

8. Verwendung nach einem der Ansprüche 1 bis 7, bei der die Glaskeramik Hochquarz-Mischkristallphase, Tiefquarz-Mischkristallphase oder eine Mischung dieser enthält.

9. Verwendung nach Anspruch 8, bei der die Glaskeramik Hoch-quarz-Mischkristallphase in einer höheren Menge als Tiefquarz-Mischkristallphase und die insbesondere Hochquarz-Mischkristallphase als Hauptkristallphase enthält.

10. Verwendung nach Anspruch 8, bei der die Glaskeramik Tief-quarz-Mischkristallphase in einer höheren Menge als Hochquarz-Mischkristallphase und die insbesondere Tiefquarz-Mischkristallphase als Hauptkristallphase enthält.

11. Verwendung nach einem der Ansprüche 1 bis 10, bei der die Glaskeramik Zirkonoxid und insbesondere tetragonales Zirkonoxid als Kristallphase enthält.

12. Verwendung nach einem der Ansprüche 1 bis 11, wobei die Glaskeramik in Form von einem Pulver, einem Rohling oder einer dentalen Restauration vorliegt.

13. Verwendung nach einem der Ansprüche 1 bis 12 zur Herstellung dentaler Restaurationen.

14. Verwendung eines Ausgangsglases, das die Komponenten der Glaskeramik wie definiert in einem der Ansprüche 1 bis 6 enthält, als Dentalmaterial und insbesondere zur Herstellung dentaler Restaurationen.

15. Verwendung nach Anspruch 14, bei der das Ausgangsglas Keime für die Kristallisation von Quarz-Mischkristallphase enthält.

16. Verwendung nach Anspruch 14 oder 15, wobei das Ausgangsglas in Form von einem Pulver, einem Rohling oder einer dentalen Restauration vorliegt.

17. Verwendung nach einem der Ansprüche 1 bis 16, wobei der Glaskeramik oder dem Ausgangsglas durch maschinelle Bearbeitung die Form der gewünschten dentalen Restauration, insbesondere Brücke, Inlay, Onlay, Veneer, Abutment, Teilkrone, Krone oder Schale, gegeben wird.

18. Verwendung nach einem der Ansprüche 9, 11 bis 13 oder 15 bis 17, wobei dem Ausgangsglas mit Keimen oder der Glaskeramik mit höherer Menge an Hochquarz-Mischkristallphase wie definiert in Anspruch 9 durch maschinelle Bearbeitung, insbesondere im Rahmen eines CAD/CAM-Verfahrens, die Form der gewünschten dentalen Restauration gegeben wird.

## Claims

1. Use of a glass ceramic having a quartz solid solution phase, which comprises the following components
| Component | wt.-% |
|---|---|
| SiO₂ | 37.0 to 50.0 |
| Al₂O₃ | 25.0 to 39.0 |
| MgO | 5.0 to 15.0 |
| ZrO₂ | 13.5 to 19.0 |
as dental material.

2. Use according to claim 1, wherein the glass ceramic comprises 38.0 to 49.0 wt.-%, in particular 38.5 to 48.0 wt.-% SiO₂.

3. Use according to claim 1 or 2, wherein the glass ceramic comprises 26.0 to 38.0 and in particular 27.0 to 37.0 wt.-% Al₂O₃.

4. Use according to any one of claims 1 to 3, wherein the glass ceramic comprises 6.0 to 14.0 and in particular 7.0 to 13.5 wt.-% MgO.

5. Use according to any one of claims 1 to 4, wherein the glass ceramic comprises 14.0 to 18.0 wt.-% ZrO₂.

6. Use according to any one of claims 1 to 5, wherein the glass ceramic comprises at least one and preferably all of the following components in the given amounts:
| Component | wt.-% |
|---|---|
| Li₂O | 0 to 1.0 |
| Na₂O | 0 to 1.0 |
| K₂O | 0 to 1.0 |
| CaO | 0 to 2.5 |
| SrO | 0 to 4.0 |
| ZnO | 0 to 15.0 |
| B₂O₃ | 0 to 1.0. |

7. Use according to any one of claims 1 to 6, wherein the glass ceramic comprises the quartz solid solution phase as main crystal phase.

8. Use according to any one of claims 1 to 7, wherein the glass ceramic comprises high-quartz solid solution phase, low-quartz solid solution phase or a mixture thereof.

9. Use according to claim 8, wherein the glass ceramic comprises high-quartz solid solution phase in a higher amount than low-quartz solid solution phase and which in particular comprises high-quartz solid solution phase as main crystal phase.

10. Use according to claim 8, which comprises low-quartz solid solution phase in a higher amount than high-quartz solid solution phase and which in particular comprises low-quartz solid solution phase as main crystal phase.

11. Use according to any one of claims 1 to 10, wherein the glass ceramic comprises zirconium oxide and in particular tetragonal zirconium oxide as crystal phase.

12. Use according to any one of claims 1 to 11, wherein the glass ceramic is present in the form of a powder, a blank or a dental restoration.

13. Use according to any one of claims 1 to 12 for the preparation of dental restorations.

14. Use of a starting glass comprising the components of the glass ceramic as defined in any one of claims 1 to 6 as dental material and in particular for the preparation of dental restorations.

15. Use according to claim 14, wherein the starting glass comprises nuclei for the crystallization of quartz solid solution phase.

16. Use according to claim 14 or 15, wherein the starting glass is present in the form of a powder, a blank or a dental restoration.

17. Use according to any one of claims 1 to 16, wherein the glass ceramic or the starting glass is given, by machining, the shape of the desired dental restoration, in particular bridge, inlay, onlay, veneer, abutment, partial crown, crown or facet.

18. Use according to any one of claims 9, 11 to 13 or 15 to 17, wherein the starting glass comprising nuclei or the glass ceramic with a higher amount of high-quartz solid solution phase as defined in claim 9 is given the shape of the desired dental restoration by machining, in particular in a CAD/CAM process.

## Revendications

1. Utilisation d'une vitrocéramique à phase cristalline mixte à quartz, qui contient les composants suivants
| Composant | % en poids |
|---|---|
| SiO₂ | 37,0 à 50,0 |
| Al₂O₃ | 25,0 à 39,0 |
| MgO | 5,0 à 15,0 |
| ZrO₂ | 13,5 à 19,0, |
en tant que matériau dentaire.

2. Utilisation selon la revendication 1, dans laquelle la vitrocéramique contient 38,0 à 49,0 % en poids, en particulier 38,5 à 48,0 % en poids de SiO₂.

3. Utilisation selon la revendication 1 ou 2, dans laquelle la vitrocéramique contient 26,0 à 38,0 et en particulier 27,0 à 37,0 % en poids d'Al₂O₃.

4. Utilisation selon l'une quelconque des revendications 1 à 3, dans laquelle la vitrocéramique contient 6,0 à 14,0 et en particulier 7,0 à 13,5 % en poids de MgO.

5. Utilisation selon l'une quelconque des revendications 1 à 4, dans laquelle la vitrocéramique contient 14,0 à 18,0 % en poids de ZrO₂.

6. Utilisation selon l'une quelconque des revendications 1 à 5, dans laquelle la vitrocéramique contient au moins un et de préférence la totalité des composants suivants en les quantités indiquées :
| Composant | % en poids |
|---|---|
| Li₂O | 0 à 1,0 |
| Na₂O | 0 à 1,0 |
| K₂O | 0 à 1,0 |
| CaO | 0 à 2,5 |
| SrO | 0 à 4,0 |
| ZnO | 0 à 15,0 |
| B₂O₃ | 0 à 1,0. |

7. Utilisation selon l'une quelconque des revendications 1 à 6, dans laquelle la vitrocéramique contient la phase cristalline mixte à quartz en tant que phase cristalline principale.

8. Utilisation selon l'une quelconque des revendications 1 à 7, dans laquelle la vitrocéramique contient une phase cristalline mixte à forte teneur en quartz, une phase cristalline mixte à faible teneur en quartz ou un mélange de celles-ci.

9. Utilisation selon la revendication 8, dans laquelle la vitrocéramique contient la phase cristalline mixte à forte teneur en quartz en une plus grande quantité que la phase cristalline mixte à faible teneur en quartz et en particulier contient la phase cristalline mixte à forte teneur en quartz en tant que phase cristalline principale.

10. Utilisation selon la revendication 8, dans laquelle la vitrocéramique contient la phase cristalline mixte à faible teneur en quartz en une plus grande quantité que la phase cristalline mixte à forte teneur en quartz et en particulier contient la phase cristalline mixte à faible teneur en quartz en tant que phase cristalline principale.

11. Utilisation selon l'une quelconque des revendications 1 à 10, dans laquelle la vitrocéramique contient en tant que phase cristalline de l'oxyde de zirconium et en particulier de l'oxyde de zirconium tétragonal.

12. Utilisation selon l'une quelconque des revendications 1 à 11, dans laquelle la vitrocéramique est présente sous forme d'une poudre, d'une ébauche ou d'une restauration dentaire.

13. Utilisation selon l'une quelconque des revendications 1 à 12 pour la production de restaurations dentaires.

14. Utilisation d'un verre de départ qui contient les composants de la vitrocéramique telle que définie dans l'une quelconque des revendications 1 à 6, en tant que matériau dentaire et en particulier pour la production de restaurations dentaires.

15. Utilisation selon la revendication 14, dans laquelle le verre de départ contient des germes pour la cristallisation de phase cristalline mixte à quartz.

16. Utilisation selon la revendication 14 ou 15, dans laquelle le verre de départ est présent sous forme d'une poudre, d'une ébauche ou d'une restauration dentaire.

17. Utilisation selon l'une quelconque des revendications 1 à 16, dans laquelle on donne par usinage à la vitrocéramique ou au verre de départ la forme de la restauration dentaire désirée, en particulier de bridge, d'inlay, d'onlay, de placage, de pilier, de couronne partielle, de couronne ou de facette.

18. Utilisation selon l'une quelconque des revendications 9, 11 à 13 ou 15 à 17, dans laquelle on donne au verre de départ avec germes ou à la vitrocéramique à plus grande quantité de phase cristalline mixte à forte teneur en quartz, telle que définie dans la revendication 9, par usinage, en particulier dans le cadre d'un procédé CAD/CAM, la forme de la restauration dentaire désirée.
